# EUROPEAN PATENT APPLICATION

(11) **EP 1 731 043 A1**
(43) Date of publication of application: **13.12.2006**
(21) Application number: 05076366.3
(22) Date of filing: 10.06.2005
(51) Int. Cl.: A23L 1/035, A23L 1/03, A23L 1/0524, A23L 1/0562

(54) **Pectin conjugates**

(71) Applicant: Nederlandse Organisatie voor Toegepast-Natuurwetenschappelijk Onderzoek TNO, 2628 VK Delft (NL)
(72) Inventor: Boumans, Johannes Wilhelmus Leonardus, 1191 RH Ouderkerk aan de Amstel (NL); Happe, Randolph Peter, 1502 GP Zaandam (NL); Bos, Martin Anton, 6708 SL Wageningen (NL); Nagtegaal, Ricardo Marinus Albertus, 3706 GV Zeist (NL); Degn, Peter, 8250 Ega (DK); Faergemand, Merete, 3450 Alleroed (DK)
(74) Representative: Winckels, Johannes Hubertus F.

(57) **Abstract**

The invention relates to conjugates of phenolic polymers, methods for preparing the same and use of conjugates of phenolic polymers in among others foodstuffs. Provided is a surface active composition comprising a phenolic polymer, preferably pectin, cross-linked to a oligopeptide. The oligopeptide can be derived from a hydrolysate of casein consisting of peptides with an average chain length of about 3 to about 30 amino acids, preferably of about 5 to about 20 amino acids, more preferably of about 7 to about 15 amino acids, most preferably of about 10 amino acids. Also provided is a method of batch-wise cross-linking a oligopeptide and a phenolic polymer by mixing said peptide and said polymer with an enzyme and oxidizing agent suitable for said enzyme in a solvent, wherein said peptide has a chain length of about 3 to about 30 amino acids, preferably of about 5 to about 20 amino acids, more preferably of about 7 to about 15 amino acids, most preferably of about 10 amino acids.

## Description

The invention relates to conjugates of phenolic polymeres, methods for preparing the same and use of conjugates of phenolic polymeres in among others foodstuffs. In particular, it relates to surface active compositions comprising phenolic polymeres that are covalently cross-linked to a proteinaceous substance.

Phenolic polymeres are polymeres comprising one or more phenolic substituents. Preferred phenolic substituents are ferulic acid, caffeic acid, coumaric acid, vanillic acid and cinnamic acid. The polymer is preferably a polysaccharide comprising phenolic substituents. Naturally occuring phenolic polymeres comprise polymeres of monosaccharides, such as pectins, heteroxylans, arabinoxylans as well as hemicellulosic material. Also polymers to which phenolic groups have been added chemically or enzymatically are within the scope of the invention.

Pectin (E440) is a heterogeneous grouping of acidic structural polysaccharides. It is a natural substance and, as a component of the middle lamella and the primary cell wall, an important structural element of all plants. It acts as a bonding substance with supporting and stabilizing functions and controls, due to its great swelling ability and hydrocolloid nature, the plant's water system.

Pectin mainly consists of D-galacturonic acid molecules which are linked to each other by α-(1,4)-glycosidic bonds to become polygalacturonic acid. The carboxyl groups are partially esterified with methanol. In some cases, the secondary alcohol groups of the pectins can also carry acetyl groups. In beet pectins also ferolyl groups can be found. The presence of neutral sugars such as galactose, arabinose or xylose which are linked as side chains to the pectin macromolecule and the rupture of the main chain caused by rhamnose make pectin to a branched zig-zag-shaped heteropolysaccharide.

Pectins are mainly used as gelling agents, but can also act as thickener, water binder and stabilizer. Low methoxyl pectins (< 50% esterified) form thermoreversible gels in the presence of calcium ions and at low pH (3 - 4.5) whereas high methoxyl pectins rapidly form thermally irreversible gels in the presence of sufficient (e.g. 65% by weight) sugars such as sucrose and at low pH (< 3.5); the lower the methoxyl content, the slower the set. The degree of esterification can be (incompletely) reduced using commercial pectin methylesterase, leading to a higher viscosity and firmer gelling in the presence of Ca²⁺ ions.

The polysaccharide pectin has been used as a food additive, a thickening agent, and a gelling agent (Rolin C. Pectin. In: Whistler RL, Bemiller JN, eds. Error! Hyperlink reference not valid.Error! Hyperlink reference not valid.Industrial Gums: Polysaccharides and Their Derivatives. New York, NY: Academic Press; 1993:257-293)**Error! Hyperlink reference not valid..** In addition, pectin can reduce interfacial tension between an oil phase and a water phase and may be used for the preparation of emulsion (Leroux J, Langendorff V, Schick G, Vaishnav V, Mazoyer J. Emulsion stabilizing properties of pectin. Error! Hyperlink reference not valid.Error! Hyperlink reference not valid.Food Hydrocolloids. 2003;17:455-462).

A specific class of pectin is represented by beet pectin, in particular sugar beet pectin. Sugar beet pectin is one of the few polysaccharides which contain ferulic acid. It is attached to the O-2 position of (1,5)-linked arabinose residues in the arabinan side-chains and it can also be found to be attached to the O-6 position of galactose residues in (1,4)-linked galactans. It is well known that several oxidizing agents, including, oxidative enzymes, are capable of initiating oxidative cross-linking of beet pectins, via the formation of ferulic acid dehydrodimers.

There are various examples of the use of **Error! Hyperlink reference not valid.** pectin in the food industry, for example use as a fat replacer or as an emulsifier. WO96/03440 discloses pectin derived from sugar beet, which is modified using a laccase enzyme. The phenolic groups of the sugar beet pectins are modified such that a cross-linked gel is provided. It is taught in WO96/03440 that the gel may be used in foodstuffs as thickening, stabilising, setting or viscosity regulating agent or that the gel may be used in medicinal or agricultural applications. EP0656176 discloses a calcium-sensitive pectin. Calcium is added to the pectin to form ionic bonds between the pectin. The ionic bonding results in the formation of a gel. The gel is dehydrated, dried and milled. EP0 656 176 teaches that the milled pectin gel may be used for inter alia replacement of fat in a foodstuff. WO00/40098 discloses a fat replacer comprising a pectin composition wherein at least a population of the pectin molecules is covalently cross-linked to one another.

Present invention provides a novel surface active composition comprising phenolic polymeres that are cross-linked to oligopeptides. A surface active composition lowers the surface tension of the medium in which it is dissolved, and/or the interfacial tension with other phases, and, accordingly, is positively adsorbed at the liquid/vapour and/or at other interfaces. The term surfactant is also applied correctly to sparingly soluble substances, which lower the surface tension of a liquid by spreading spontaneously over its surface. The term "oligopeptide" refers to a peptide of about 3 to about 30 amino acids, preferably of about 5 to about 20 amino acids, more preferably of about 7 to about 15 amino acids, most preferably of about 10 amino acids.

A composition of the invention has surprisingly good surface active properties and is advantageously used, e.g. as emulsifier or foam stabilizer, in a foodstuff.

In one embodiment the phenolic polymere is a pectin comprising phenolic substituents. It is thought that attachment of oligopeptides provide a hydrophobic moiety to the predominantly hydrophilic pectin structure. The presence of the peptide moiety thus enhances the hydrophobic nature of the molecule, giving it a surface active character with potential as an interfacial agent in oil/water emulsions and air/water foams. Accordingly, composition wherein the oligopeptide has a high hydrophobicity (i.e. low hydrophilicity) are preferred.

The trend of hydrophobicity parameters for the physiological L-alpha-amino acids is as follows: Phe > Leu = Ile > Tyr = Trp > Val > Met > Pro > Cys > Ala > Gly > Thr > Ser > Lys > Gln > Asn > His > Glu > Asp > Arg. The average hydrophobicity of a given peptide can be calculated by several methods known in the art. For example, the software available free of charge at http://www.innovagen.se/custom-peptide-synthesis/peptide-property-calculator/peptide-property-calculator.asp can be used to deduce the average hydrophilicity value of a peptide. The average hydrophilicity value of a peptide according to this method is given by a number between +3 and -3. A negative value implies that the average amino acid has a hydrophobic nature, whereas a positive value implies that the average amino acid has a hydrophilic nature. In one embodiment, the average hydrophilicity of the oligopeptide is lower than zero, preferably lower than -0.3, preferably lower than -0.5, more preferably lower than -0.7.

According to the invention, phenolic polymers, such as pectins comprising phenolic substituents can be cross-linked to any type of oligopeptide. It may be a plurality of the same oligopeptide (homo-oligopeptides), or to a mixture of different oligopeptides (hetero-oligopeptides). Synthetic peptides may be used which are synthesized according to standard procedures, for example solid phase peptide synthesis. Oligopeptides may contain one or more amino acid analogues, such as a D-amino acid analogue. An advantage of synthetic peptides is that they can be custom-made with respect to peptide length and amino acid sequence. It allows, for instance to prepare a strongly hydrophobic peptide comprising one or more tyrosine residues via which the peptide can be enzymatically attached to a phenolic group of the phenolic polymer. However, the use of synthetic oligopeptides can be economically unattractive since peptide synthesis, especially that of highly pure peptides, is relatively expensive. Therefore, the use of oligopeptides obtained from a natural source may be preferred. For example, a protein hydrolysate can be used as a source of oligopeptides. Since a composition of the invention is particularly useful in foodstuff, edible proteins are the preferred sources of oligopeptides.

In a specific aspect, the composition of the invention comprises pectin that is cross-linked to oligopeptide derived from an edible protein. Whereas also other proteins, such as soy or gluten proteins can be used as sources of oligopeptides, the use of milk derived proteins, such as whey or casein are preferred because of their taste contribution. Oligopeptides derived from casein are particularly preferred. Casein hydrolysates are widely available and represent a relatively inexpensive source of oligopeptides. In addition, casein hydrolysates are a good source for hydrophobic peptides. Casein represents approximately 80% of total milk protein. The principal casein proteins are alpha(s1) and alpha(s2)-caseins, β-casein, and kappa-casein. The distinguishing property of all caseins is their low solubility at pH 4.6. The high number of proline residues in caseins causes particular bending of the protein chain and inhibits the formation of close-packed, ordered secondary structures.

Casein hydrolysates can be prepared by methods known in the art (Enzymic hydrolysis of food proteins, J. Adler-Nissen (1986) Elsevier Applied Science Publishers LTD). This typically involves either enzyme-mediated hydrolysis or chemical (acid) cleavage of peptidic bonds. For example, proteolytic enzymes (proteases) such as trypsin or trypsin like proteases can be used to obtain oligopeptides.
In a preferred embodiment, the hydrolysate of casein consists of peptides with an average chain length of about 3 to about 30 amino acids, preferably of about 5 to about 20 amino acids, more preferably of about 7 to about 15 amino acids, most preferably of about 10 amino acids.

The term "pectin" includes fractions of pectin, one or more compounds from the class of compounds known as pectins, and derivatives thereof. All plant raw materials with high pectin content is suitable for the production of pectins. The extraction of soluble pectin on industrial scale is generally carried out by means of acid hydrolysis resulting in liquid pectin. This liquid pectin can be dried to obtain pectin extracts or the pectin can be isolated from the aqueous solution by alcohol precipitation. Afterwards it is dried, grinded and sieved to a defined particle size. For the industrial production the prime sources are apple pomace, citrus peels and sugar beet chips. The various raw materials yield different amounts of extractable pectin. Pectins extracted from various raw materials differ in molecular structure (i.e. molecular weight, degree of esterification, acetyl content, neutral sugar content, distribution of the methoxylated carboxyl groups) and therefore possess different functional properties. However, following conjugation to oligopeptides, any type of pectin is suitably used as surface active substance according to the invention.

Preferably, the pectin material and/or the pectin composition contain at least a population of pectin which have phenolic substituents.

Preferably the pectin comprising phenolic substituents is obtainable from or is obtained from members of the plant family *Chenopodiaceae* (which includes beets, spinach and mangewurzels). More preferably, the pectin material and/or the pectin composition is obtainable from or is obtained from beets, yet more preferably, sugar beets. Preferably, the phenolic substituents are phenolic acid substituents.

As said, pectin is a heterogeneous grouping of acidic structural polysaccharides. In one embodiment, a composition according to the invention comprises pectin cross-linked to a oligopeptide, wherein the pectin has a molecular weight ranging from about 10,000 kDa to about 500,000 kDa, preferably from about 50.000 kDa to about 250.000 kDa, more preferably from about 75.000 kDa to about 150.000 kDa, most preferably about 100.000 kDa. Pectin may be extracted from plants, e.g. using the isolation method described in WO00/40098. Pectin is commercially available from various suppliers, for instance from Danisco A/S or CP Kelco

The relative presence of oligopeptide moieties and phenolic polymers, such as pectins pectin molecules in a cross-linked composition can vary. In one embodiment, the weight ratio of phenolic polymers, such as pectin to oligopeptide in the composition ranges from about 100:1 to about 6: 1.

According to the invention, oligopeptides can be cross-linked to phenolic polymers, such as pectin via any type of intermolecular linkage. In a preferred embodiment, the cross-links are provided between a phenolic moiety of the polymer and a tyrosine, lysine or cysteines moiety of the peptide. Cross links of this type can be achieved enzymatically. For example, the teaching of WO00/40098 can be used which discloses the use of various cross-linking agents, including enzymes and chemical cross-linking agents such as oxidants such as peroxides, persulfates or perchlorates: aldehydes such as formalin or glutaric aldehyde and epoxides.

Preferably the cross-linking agent is an enzyme.

Preferably the enzyme is selected oxidoreductases (i.e. enzymes employing molecular oxygen as acceptor) such as laccases (EC 1.10.3.2) capable of catalysing oxidation of phenolic groups, phenol-oxidising oxidoreductases (EC 1.10.3.1), glucoseoxidases, hexoseoxidases, peroxidases (EC 1.11.1.7), mixtures and derivatives thereof. Commercial laccase preparation may be obtained from Novozymes, Biocatalysts or Jülich Fine Chemicals.

Preferably the enzyme is laccase. Laccases can be obtained from a variety of microbial sources, notably bacteria and fungi including filamentous fungi and yeasts.

Typically, the reaction mixture containing the polymers, the peptides and laccase will be contacted to atmospheric air. This will normally suffice to ensure an adequate supply of oxygen for oxidation, although forcible aeration of a reaction mixture with air, or possibly even substantially pure oxygen, may be advantageous under certain conditions.

When peroxidases are used, the oxidizing agent is hydrogen peroxide, methylperoxide, ethylperoxide or sodium perborate. Alternatively, hydrogen peroxide can be generated in situ by an enzyme system comprising an oxidoreductase such as glucose oxidase, sulfhydryl oxidase, vanillyl alcohol oxidase etc. and an appropriate substrate. Plant peroxidases are the preferred peroxidases, of which horseradish peroxidase is the preferred peroxidase.

In a preferred embodiment, an enzymatic cross-linking procedure is employed. As is exemplified in Example 2 below, cross-linking of oligopeptides to pectin in a batch wise procedure resulted in the desired heterologous pectin-oligopeptide cross-linked composition. Thus a high degree of cross-linking between pectin and oligopeptides can be obtained by mixing all necessary substrates and reagents together without running the risk of unwanted formation of pectin-pectin and peptide-peptide cross-linked compositions. This is unlike the situation in EP1169922, which discloses a method for enzymatically cross-linking proteins and phenolic polymers. According to the published method, the procedure needs to be controlled such that the formation of hetero-cross-linked products (i.e. protein-phenolic polymer) is favoured, while minimizing the formation of peptide-peptide and/or phenolic polymer-phenolic polymer cross-links. To that end, the protein must be present initially in a high ratio as compared to the phenolic polymer. By subsequent stepwise or continuous addition a small quantities of the substrate, desired cross-linking products could be achieved. Whereas a cross-linked pectin composition of the present invention may be prepared in a similar fashion, it surprisingly appeared that the use of oligopeptides makes the rather complex controlled procedure of EP1169922 redundant.

Herewith, the invention also provides a method of batch-wise cross-linking a oligopeptide and a phenolic polymer comprising mixing said oligopeptide and said polymer with an enzyme and oxidizing agent suitable for said enzyme in a solvent, wherein said peptide has a chain length of about 3 to about 30 amino acids, preferably of about 5 to about 20 amino acids, more preferably of about 7 to about 15 amino acids, most preferably of about 10 amino acids. The oligopeptide can be derived from a hydrolysate of casein.

The term 'batch-wise" as used herein is meant to indicate that all the substrates and reagents involved in the cross-linking reaction are present at the onset of the reaction. This is in contrast with the method disclosed in EP1169922, wherein pectin is initially only present in very small amounts to avoid formation of pectin/pectin and peptide/peptide linkages, and is therefore supplemented during the reaction.

A method of the invention is not limited to cross-linking peptides to pectin. Rather, any type of polymeric materials having phenolic substituents can be used as a starting material.

The invention furthermore provides a use of the cross-linked polymer/peptide composition as emulsifier, and/or foam stabiliser. The invention also provides a foodstuff comprising a composition according to the invention. The term "foodstuff" may include food for human and/or animal consumption. The foodstuff is for example selected from products made from or containing milk (such as cheese, fresh cheese, yoghurt ,sour cream or ice cream), low fat spread, mayonnaise, sauces, meat and meat products, poultry products, fish products, fruit spreads, bakery products including bakery fillings, margarine, reconstituted fruits, jams, fruit preparations, fruit fillings, ripples, fruit sauces, stewed fruit, coffee whitener, instant fruit dessert, confectionery (such as marsh mallow), and fine foods (such as dressings including salad dressings; ketchup, vinaigrette dressings and soups). The foodstuff may be a beverage. The beverage may be a drinking yoghurt, a fruit juice, a beverage concentrate or a fruit based beverage.

A composition of the invention is advantageously used as foam stabiliser in liquid or solid foodstuff, for example in aerated (frozen) confection products such as ice cream and mousse-type desserts.

In one embodiment, a composition is used as a foam stabiliser in beer. Foam occurs on dispensing the beer as a result of the formation of CO₂ bubbles released by the reduction in pressure. The CO₂ bubbles collect surface active materials as they rise. These surface active substances have a low surface tension. This means that, within limits, they can increase their surface area and also, after the bubbles have risen, they form an elastic skin around the gas bubble. The greater the amount of dissolved CO₂, the more foam is formed. But foam formation is not the same as foam stability. Foam is only stable in the presence of these surface active substances, such as a composition according to the present invention.

The present invention may be used in the preparation of a starting reagent or an intermediate in the preparation of a foodstuff. Alternatively, present invention may be used in the preparation of a foodstuff itself. The pectin composition may be incorporated in materials other than foodstuffs. For example, the pectin composition may be incorporated in cosmetics (such as cream) and pharmaceuticals.

The invention is illustrated by the following examples.

### Analytical methods

### Determination of laccase activity

Laccase activity as defined herein is determined on the basis of spectrophotometric measurements of the oxidation of ABTS under aerobic conditions. The intensity of colour produced in the oxidation reaction is measured at 410 nm.

Dilution buffer: 100 mM sodium acetate buffer, pH 5.0, containing BSA (100 mg/l) and 0.01% Tween 20. This buffer is used to dilute laccase samples. Reagent buffer: 100 mg ABTS in 20 ml of 100 mM sodium acetate buffer pH 5.0 (prepare fresh daily).

Directly prior to the assay, aerate the reagent buffer with oxygen. Mix 900 µliter of reagent buffer with 100 µliter (diluted) sample and measure the change in extinction at 410 nm and at 25 °C over time. Calculate the activity using a molar extinction coefficient of 36.800.
One laccase unit is the amount of enzyme that catalyses the conversion of 1 µM of ABTS per minute at 25 °C.

### Example 1. Preparation of sugar beet pectin Teknisk

Fresh sugar beet pulp was obtained from a sugar factory (Danisco Sugar and Sweetener in Assens, Denmark). Extraction of sugar beet pectin from sugar beet pulp was performed as described in Buchholt et al. (2004) Carbohydrate Pol. 58, 149-161.

### Example 2. Production of pectin conjugate

A solution was prepared containing 0.67% (w/v) pectin Teknisk and 0.33% (w/v) casein hydrolysate CE90GBT (DMV International, Veghel, The Netherlands). The solution was heated to 40 °C, kept at constant pH of 6.0 using a pH stat, 570 Units/litre laccase (*Trametes versicolor;* Wacker Chemie) was added and the solution was incubated for 16 hours. The solution was then freeze-dried. The product is named pectin conjugate in all examples described below.
In addition, several other cross-linked products were made as controls. 0.67% pectin Teknisk was incubated with laccase under identical conditions, giving PxP. 0.33% casein hydrolysate CE90GBT was incubated with laccase under identical conditions, giving HxH.

### Example 3. Effect on surface tension

Surface tension of samples was measured with the Wilhelmy plate technique and the equilibrium value was taken after 1.5 hours. At least two measurements were performed at 22 °C.
Of each sample, a 0.01% solution in water was prepared. The decrease in equilibrium surface tension was determined. Surface tension of water was found to be 71.8 mN/m.

| Sample | Decrease surface tension (mN/m) |
|---|---|
| Pectin | 1.05 |
| Cross-linked pectin + protein hydrolysate | 3.15 |
| Pectin conjugate | 8.0 |

### Example 4. Beer foam stability

### Foam preparation and foam analysis

Foam was prepared according to the whipping method described by Caessens (1999, Enzymatic hydrolysis of β-casein and β-lactoglobulin, PhD Thesis, WAU). A solution was whipped for 70 s at 3500 rpm. The resulting foam was poured in the cuvet of the Foam Analyser. The size of the cuvet is 45 x 57 x 134 mm. Perspex and/or teflon cubes were placed in the cuvet to elevate the foam to the height of the camera.
Foam was analyzed in transmission and reflection mode. In the transmission mode light passed straight through the cuvet to a camera at the opposite side of the light source. For analysis in reflection mode a prism of 90° is placed on the 57 mm side of the cuvet. Light source and camera are placed in such a way that an image of the foam at the glass side can be taken in reflection. The camera is a Mega Pixel Progressive Scan Camera (1300 x 1030 pixels).

After placing the cuvet in the Foam Analyser 50 images were taken at an interval of 60 s. From images taken in transmission foam height was determined.

### Foam volume as a function of time of pectin conjugate in water

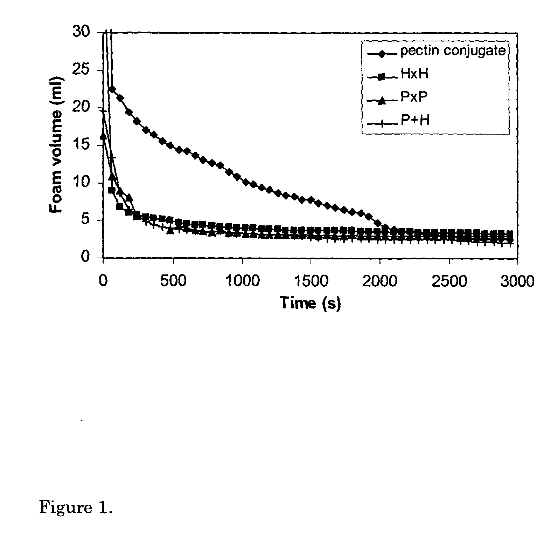

Foams were prepared with 0.1% pectin conjugate in water. As controls, a mixture of pectin (0.067%) and casein hydrolysate (0.033%) coded P+H, cross-linked pectin coded PxP and cross-linked casein hydrolysate coded HxH were included.
Results of foam analysis are shown in figure 1.

### Foam volume as a function in time of pectin conjugate in beer

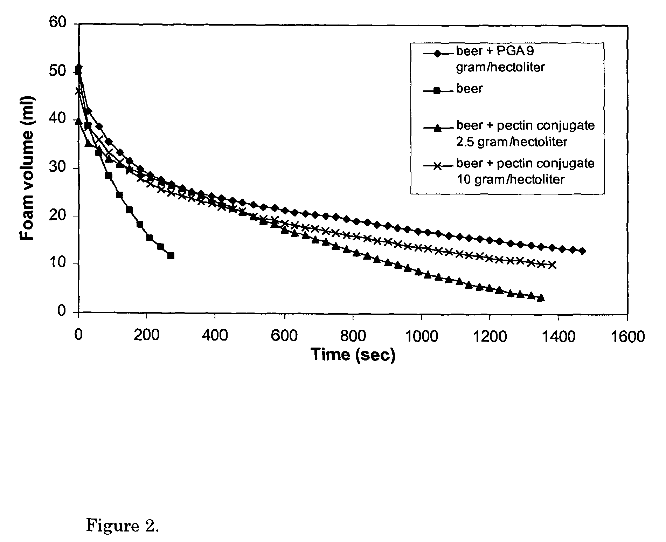

Beer with poor foaming properties was obtained from Diageo, Dublin, Ireland. Pectin conjugate in several concentrations was added to the beer. As a reference, PGA (commercial name Biofoam, Quest International) was included. Results of foam volume in time are shown in figure 2.

### Example 5. Emulsion stability

All emulsions prepared contained 30% sunflower oil and an aqueous phase containing polysaccharide in 20 mM phosphate pH 6.0. Each emulsion was 15 ml in volume. Emulsions were prepared by mixing oil into polysaccharide solution using an Ultra Turrax (Polytron, Switzerland) for 60 seconds at 30,000 RPM. Next, the mixture was homogenized by 10 passes through a Delta lab-scale homogenizer operating at a pressure of 150 bar.
The size of the particles in the emulsion (emulsion droplets) was determined using static laser scattering with a Malvern Mastersizer-X (lens 45 mm, range 0.1-80µm). An amount of sample varying between 2-5ml is added to the suspension unit (MSX-14) filled with tap water (±1liter), stirred (rate 5) and pumped through the measuring device (obscuration of 20±5). At t=30s and t=2min. the scattering is determined. Particle size distribution (based on volume %) is derived from the measurement according to the polydisperse analysis model. Evaluation of the characteristics was mainly done by interpreting the entire particle size distribution (D[3,2], D[4,3], D(v,0.5) and D(v,0.9)).

At the start and after the different storage periods the extent of sedimentation in the samples is determined in duplicate by light transmission and backscattering in a Turbiscan MA 1000. The Turbiscan detects the light intensities reflected by the sample as a function of the height in the test tube with a resolution of 0.04 cm. The sample height in the tubes, with a diameter of 1.2 cm, was about 6 cm. After each storage time, the Turbiscan scattering was recorded on the same tube having the same orientation.

### Emulsion properties of pectin conjugate

Emulsions were prepared using an aqueous phase containing 0.25% pectin conjugate. As controls, emulsions were prepared using an aqueous phase containing either 0.25% pectin, or a mixture of pectin and protein hydrolysate CE90GBT in a ratio 2:1 and a total dry weight content of 0.25%.

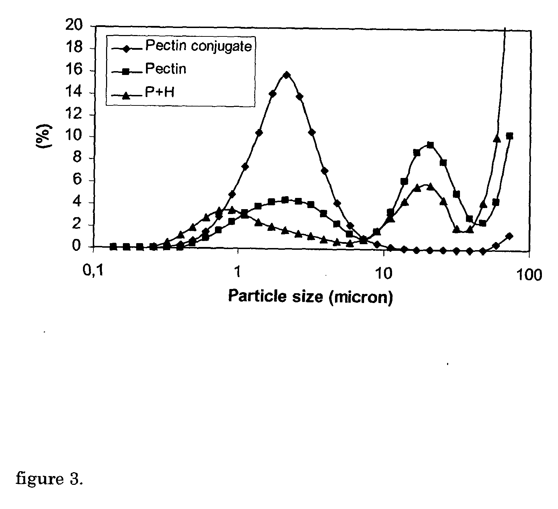

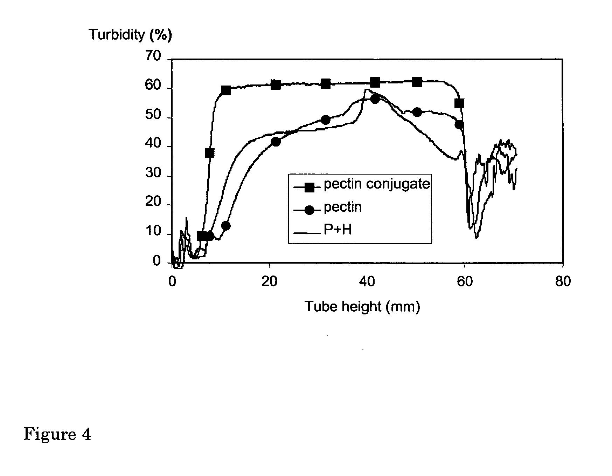

Emulsions were characterized after one week of storage at room temperature by determining particle size distribution (see figure 3) and turbidity (see figure 4).
Results of particle size distribution after one week of storage can also be depicted by the following numbers.

| | D [4,3] | D [3,2] | D (v,0.5) | D(v,0.9) |
|---|---|---|---|---|
| Pectin conjugate | 3.60 | 1.74 | 2.05 | 4.28 |
| Pectin | 16.68 | 3.69 | 13.59 | 38.27 |
| Pectin + protein hydrolysate CE90GBT | 39.95 | 3.18 | 26.35 | 75.28 |

### Bench mark with other hydrocolloids

Identical to pectin conjugate, emulsions were prepared with an aqueous phase containing 0.25% of several other hydrocolloids. Emulsion stability was
characterized by determining particle size distribution after 1 week of storage at room temperature.
Emulsions prepared with guar gum were highly unstable, making it not possible to obtain particle size distribution after 1 week of storage.

| | **D [4,3]** | **D [3,2]** | **D (v,0.5)** | **D(v,0.9)** |
|---|---|---|---|---|
| Pectin conjugate | 3.60 | 1.74 | 2.05 | 4.28 |
| Gum Arabic | 28.45 | 12.97 | 27.10 | 44.66 |
| Propylene glycol alginate | 20.17 | 8.01 | 20.62 | 30.47 |
| Whey protein isolate | 9.02 | 2.22 | 2.41 | 28.00 |

### Pectin conjugate prepared with different protein hydrolysates

In addition to protein hydrolysate CE90GBT, pectin conjugates were prepared using several hydrolysates. All protein hydrolysates were from DMV International (Veghel, The Netherlands).

| **Product name** | **Protein source** | **Average MW (Da)** | **Emulsion stability** |
|---|---|---|---|
| CE90GBT | casein | 1300 | + |
| CE90 M | casein | 450 | + |
| CE90 STL | casein | 380 | - |
| LE80GF-US | whey | 7800 | -- |
| LE80BT | whey | 950 | -- |
| WE80BG | whey | 570 | + |
| WGE80M | wheat gluten | 728 | + |

The results show that an emulsion stabilizer can be obtained by producing pectin conjugate with various protein hydrolysates.

### Example 6. Salad dressing

Salad dressing was produced according to the following method and with addition of PGA or pectin conjugate.

| Contents in g | | | |
|---|---|---|---|
| Component | PGA dressing | Pectin conjugate dressing | Reference dressing |
| Water | 2147,6 | 2147,6 | 2155,6 |
| Rape seed oil | 800,0 | 800,0 | 800,0 |
| Vinegar 10% | 120,0 | 120,0 | 120,0 |
| Sugar | 400,0 | 400,0 | 400,0 |
| Salt | 60,0 | 60,0 | 60,0 |
| Starch 509 | 20,0 | 20,0 | 20,0 |
| Phosphoric acid 8.5% | 200,0 | 200,0 | 200,0 |
| Garlic powder | 16,0 | 16,0 | 16,0 |
| Onion powder | 12,0 | 12,0 | 12,0 |
| Rhodigel 80* | 12,0 | 12,0 | 12,0 |
| Kelcoloid LVF** | 8,0 | | |
| Pectin conjugate | | 8,0 | |
| K-sorbate | 4,0 | 4,0 | 4,0 |
| EDTA | 0,4 | 0,4 | 0,4 |
| Egg yolk | 80,0 | 80,0 | 80,0 |
| SMP | 120,0 | 120,0 | 120,0 |
| SUM | 4000,0 | 4000,0 | 4000,0 |

| | | | |
|---|---|---|---|
| *Xantan gum from Danisco. **PGA from CP-Kelco | | | |

The following procedure was used to make the dressings:
1. Slurry gums in ten times its weight in oil
2. Add water to container
3. Add dry mix of EDTA and K- sorbate, add gum slurry. Mix for three minutes at 1000 RPM(don't use all water)
4. Add dry mix of buttermilk powder, sugar, salt and starch. Mix for 2 minutes.
5. Add remaining oil. Mix for three minutes
6. Add corn syrup mix for 2 minutes.
7. Add vinegar and phosphoric acid. Mix for two minutes.
8. Homogenize at 25, 75, 100, 140, 175, 200, 240 bar

The dressings were poured into 200 ml flasks and stored at +4°C. Particle size distribution was measured by laser diffraction on a Malvern Mastersizer. Viscosity was measured by Rehologica rheometer.

After 14 days of storage at +4°C no phase separation in any of the three samples is observed.
Analysis of particle size distribution after 14 days of storage shows that for dressings containing additional stabilizer (PGA and pectin conjugate) distribution is shifted towards smaller average particle size, indication that these are more stable over time and against stress than the reference sample. Viscosity measurements indicate that the dressing containing PGA is considerably higher in viscosity than both the reference and the pectin conjugate containing dressing.

## Claims

1. Surface active composition comprising phenolic polymer cross-linked to a oligopeptide.

2. Composition according to claim 1, wherein the oligopeptide has a high hydrophobicity.

3. Composition according to claim 2, wherein the oligopeptide has an average hydrophilicity lower than zero, preferably lower than -0.3, preferably lower than -0.5, more preferably lower than -0.7.

4. Composition according to any of the previous claims, wherein the phenolic polymer is a polysaccharide having phenolic groups.

5. Composition according to any of the previous claims, wherein the phenolic polymer is pectin.

6. Composition according to any of the previous claims, wherein the oligopeptide is derived from casein.

7. Composition according to claim 6, wherein the oligopeptide is derived from a hydrolysate of casein consisting of peptides with an average chain length of about 3 to about 30 amino acids, preferably of about 5 to about 20 amino acids, more preferably of about 7 to about 15 amino acids, most preferably of about 10 amino acids.

8. Composition according to any of the previous claims, wherein the pectin has a molecular weight ranging from about 10,000 kDa to about 500,000 kDa, preferably from about 50,000 kDa to about 250,000 kDa, more preferably from about 75,000 kDa to about 150,000 kDa, most preferably about 100,000 kDa.

9. Composition according to any of the previous claims, wherein the weight ratio of pectin and peptide ranges from about 100: 1 to about 6: 1.

10. A foodstuff comprising a composition according to any of the previous claims.

11. Use of a composition according to any of claims 1 to 9 as an emulsifier or foam stabiliser

12. Method of batch-wise cross-linking a oligopeptide and a phenolic polymer comprising mixing said peptide and said polymer with an enzyme and oxidizing agent suitable for said enzyme in a solvent, wherein said peptide has a chain length of about 3 to about 30 amino acids, preferably of about 5 to about 20 amino acids, more preferably of about 7 to about 15 amino acids, most preferably of about 10 amino acids.

13. Method according to claim 12, wherein the enzyme is an oxidoreductase.

14. Method according to claim 12 or 13, wherein the phenolic polymer is pectin or arabinoxylan.

15. Method according to any of claims 12-15, wherein the oligopeptide is derived from casein.
